**Europäisches Patentamt**

**European Patent Office**

**Office européen des brevets**

(11) Veröffentlichungsnummer: **0 105 942**
**B1**

(12) # EUROPÄISCHE PATENTSCHRIFT

(45) Veröffentlichungstag der Patentschrift:
**07.01.87**

(51) Int. Cl.⁴: **H 01 F 27/40**

(21) Anmeldenummer: **82109306.9**

(22) Anmeldetag: **08.10.82**

(54) **Anordnung zur Erzeugung gleichgerichteter Hochspannungen.**

(43) Veröffentlichungstag der Anmeldung:
**25.04.84 Patentblatt 84/17**

(45) Bekanntmachung des Hinweises auf die Patenterteilung:
**07.01.87 Patentblatt 87/2**

(84) Benannte Vertragsstaaten:
**BE DE FR GB IT LU NL SE**

(56) Entgegenhaltungen:
**DE - A - 2 235 917**
**FR - A - 2 284 173**
**US - A - 3 131 331**
**US - A - 3 826 967**

(73) Patentinhaber: **ANT Nachrichtentechnik GmbH,
Gerberstrasse 33, D-7150 Backnang (DE)**

(72) Erfinder: **Geissler, Klaus M., Dr. rer. nat. Dipl.-Phys.,
Nansenstrasse 21/1, D-7150 Backnang (DE)**
Erfinder: **Bock, Herbert, Amselweg 4,
D-7150 Oppenweiler (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung zur Erzeugung gleichgerichteter Hochspannungen gemäss dem Oberbegriff des Patentanspruchs 1.

Eine solche Anordnung ist bekannt aus der US-A 31 31 331. Zur Abführung der punktförmig an den Gleichrichtern auftretenden Verlustwärme sind dabei die Wicklungsenden der Spulenanordnung über «heat sink», die aus Metallbändern bestehen, mit den Gleichrichtern verbunden. Diese «heat sink» dienen dazu, die Verlustwärme nach aussen abzugeben. Grössere Wärmemengen können auf diese Weise allein nicht abgeführt werden. Insbesondere in der Raumfahrt ist eine Wärmeabgabe nach aussen durch das Fehlen eines Konvektionsmediums stark gehemmt.

Bei der Konzeption von Hochspannungstransformatoren mit nachgeschalteten Gleichrichtern stellt sich das Problem der Abführung der von den Gleichrichtern an ihrer Diodengrenzschicht punktförmig auftretenden Verlustwärme ebenso. Eine thermisch befriedigende Lösung lässt sich durch den Einbau der Gleichrichter in gas-, luft- oder flüssigkeitsgekühlte Systeme erreichen oder durch die Verwendung sehr teurer Materialen, z.B. Diament, Berryliumoxid. Bei kleinen Baueinheiten hoher Leistungsdichte verursachen flüssigkeits- oder gasgekühlte Systeme einen hohen zusätzlichen Aufwand und hohes Zusatzgewicht. Ausserdem sind hinsichtlich Betriebssicherheit und Wartung besondere Massnahmen nötig.

Bei der Erzeugung von hohen Gleichspannungen von kompakten Geräten, z.B. für die Stromversorgung von Sendeverstärkern der Nachrichtentechnik, insbesondere für die Versorgung von Wanderfeldröhren im mobilen Einsatz in Luft- und Raumfahrt, sind obengenannte Kühlungsmassnahmen oft nahezu ausgeschlossen.

Neben der Kühlung der Gleichrichter muss auch eine ausreichende Isolation der Hochspannungsgleichrichter gewährleistet sein. Es ist beispielsweise aus der DE-A-28 18 903 grundsätzlich bekannt, Hochspannungsgleichrichter und Transformatorwicklungen gemeinsam mit Isolationsmaterial, z.B. Kunstharz, zu umgiessen. Die DE-A-28 18 903 gibt jedoch keine Anregung, wie neben ausreichender Isolation auch eine günstige und wirksame Abführung der Verlustwärme der Gleichrichter verwirklicht werden könnte.

Aufgabe vorliegender Erfindung ist es, die Anordnung, ausgehend vom Oberbegriff des Patentanspruchs 1, so auszugestalten, dass neben ausreichender Isolation eine günstige Abführung der Verlustwärme der Gleichrichter gewährleistet ist.

Erfindungsgemäss wird diese Aufgabe durch die kennzeichnenden Merkmale des Patentanspruchs 1 gelöst.

In den Unteransprüchen sind vorteilhafte Ausgestaltungen der erfindungsgemässen Anordnung angegeben.

Die Erfindung geht davon aus, die punktförmig auftretende Verlustwärme der Gleichrichter über die gut wärmeleitenden Metallbänder auf den ganzen Umfang der Sekundärwicklung(en) gleichmässig zu verteilen. Durch die Azimutalverteilung der Verlustwärme steht zum Abtransport derselben eine grosse Fläche zur Verfügung. Die Verlustwärme der Gleichrichter wird daher mit kleiner Wärmestromdichte über die mit Wechselspannung kaum belastete Hauptisolationsschicht auf den als Kühlzylinder dienenden metallischen Schirm zwischen Primär- und Sekundärwicklung des Transformators abgeleitet und kann von dort auf das Transformatorgehäuse bzw. die Montageplatte abgeleitet werden.

Da das Metallband etwa die Lagenspannung der letzten Wicklungslage der Sekundärwicklung besitzt, braucht keine aufwendigere Isolierung als die zwischen den Lagen verwendete vorgesehen werden. Zwischen Metallband und der obersten Wickellage der Sekundärwicklung wird keine grosse Spannung aufgebaut. Daher hat der erfindungsgemässe Einbau der Gleichrichter den Vorteil, dass die Streukapazität auf das kleinstmögliche Mass reduziert wird. Die Anordnung eignet sich besonders für Spannungswandler, z.B. mit Schaltreglern, die mit hoher Schaltfrequenz arbeiten. Die erfindungsgemässe Anordnung ermöglicht eine hohe Leistungsdichte bei kompaktem Aufbau. Sie ist zur Hochspannungserzeugung besonders geeignet, da die Wechselspannungsisolierung der Gleichrichter in kleinen linearisierten Schritten durch den stufenweisen Spannungsaufbau in den einzelnen Wicklungslagen erfolgt.

Anhand der Zeichnungen wird die Erfindung nun näher beschrieben. Es zeigen:

Fig. 1 einen Längsschnitt zur prinzipiellen Darstellung des Transformatoraufbaus,

Fig. 2 den Anschluss der Gleichrichter bezüglich der Sekundärwicklung,

Fig. 3 eine Röntgenaufnahme eines Querschnitts durch den Transformator,

Fig. 4 eine Gesamtdarstellung des Transformators im Längsschnitt,

Fig. 5 eine Gesamtdarstellung des Transformators im Längsschnitt mit modifiziertem Einbau der Gleichrichter,

Fig. 6 eine Prinzipdarstellung der Sekundärwicklungsführung,

Fig. 7 die Beschaltung der Sekundärwicklung mit einem Brückengleichrichter,

Fig. 8 eine Ausführungsform des Metallbandes mit Ansätzen zur Befestigung der Gleichrichter und/oder Sekundärwicklungsenden und

Fig. 9 das Metallband mit aufgesetzten Flächengleichrichtern.

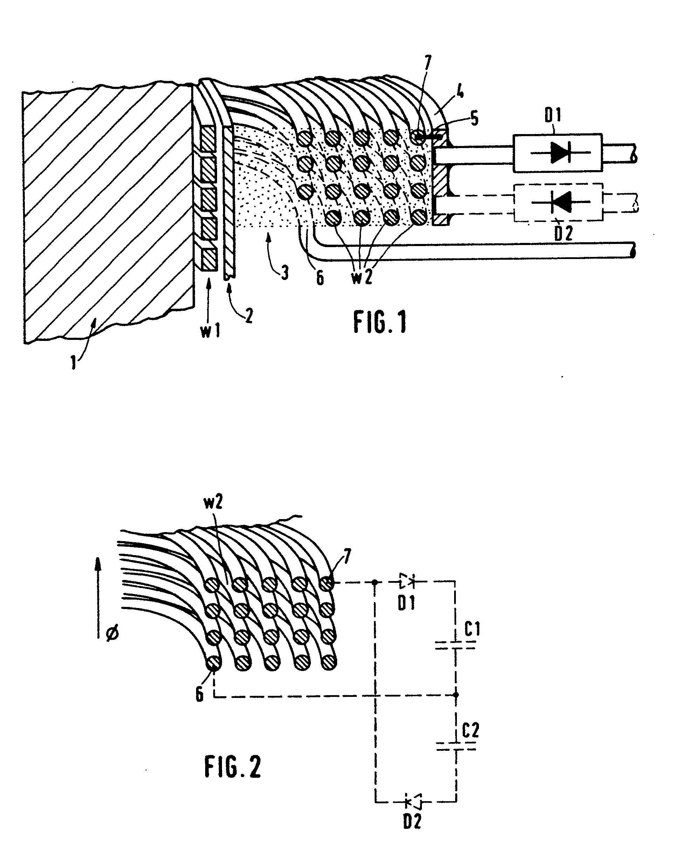

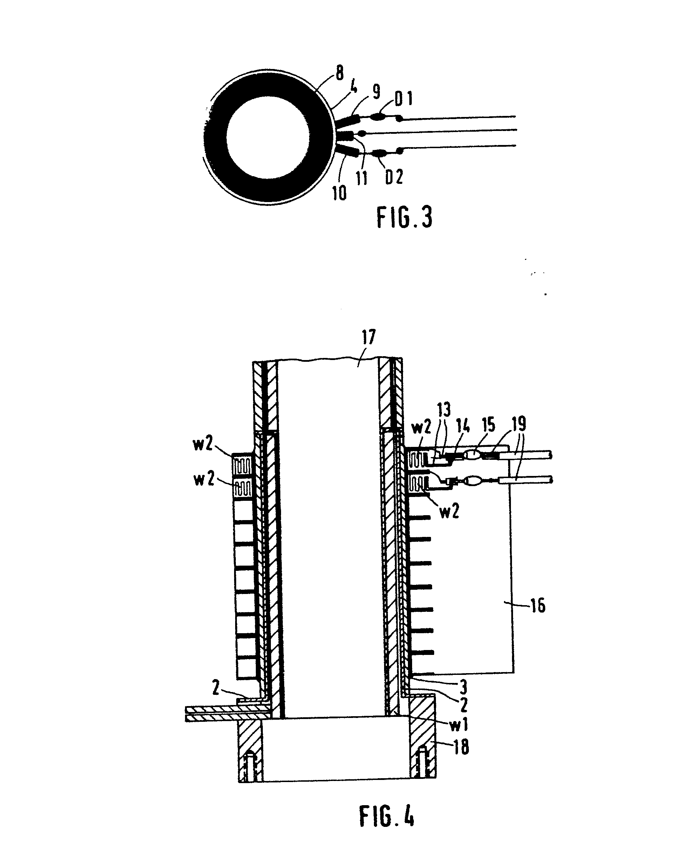

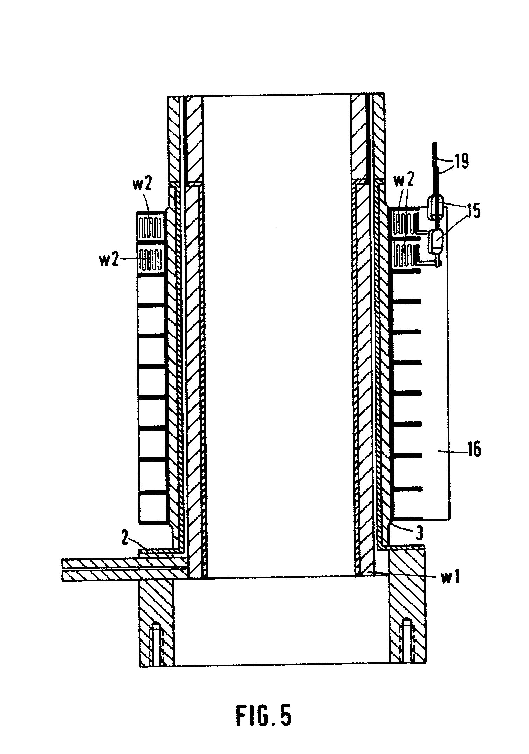

In Fig. 1 ist der prinzipielle Aufbau eines erfindungsgemässen Transformators in Zylinderform gezeigt. Der zylindrische Transformatorkern 1 ist von der Primärwicklung w1 des Transformators umgeben. Die Primärwicklung w1 ist in Isoliermaterial eingebettet. Um die Primärwicklung w1 ist ein metallischer Schirm 2 gelegt. Er ist vorzugsweise – wie Fig. 4 oder 5 zeigt – mit dem Transformatorgehäuse bzw. -sockel verbunden. Er dient einerseits zur elektrostatischen Abschirmung und andererseits zur Abführung der Verlustwärme. Über dem metallischen Schirm 2 befindet sich die Hauptisolationsschicht 3, beispielsweise in Epoxydharz eingegossenes Makrolon, welche wiederum konzentrisch von der ebenfalls in Isoliermaterial eingebetteten Sekundärwicklung w2 umgeben ist. Der äussere Umfang der Sekundärwicklung w2 ist von dem gut wärmeleitenden Metallband 4 umgeben. Das hohes Wechselspannungspotential führende Anschlussende der Sekundärwicklung ist über eine elektrische Brücke 5 an das Metallband 4 angeschlossen. Die Gleichrichterelemente D1 und D2 sind nach dem Ausführungsbeispiel gemäss Fig. 1 in das Metallband 4 eingelötet und stehen daher sowohl in gutem thermischen wie auch im elektrischen Kontakt mit dem Metallband 4. Die punktförmig auftretende Verlustwärme der Gleichrichter D1 und D2 wird so auf das Metallband 4, vorzugsweise ein Band aus Kupfer, und damit gleichmässig auf den äusseren Umfang der Sekundärwicklung w2 verteilt. Von dort aus erfolgt ein Wärmetransport mit geringer Wärmestromdichte durch die Sekundärwicklung w2 und die Hauptisolationsschicht 3 hindurch auf den die Verlustwärme abführenden Metallschirm 2. Prinzipiell ist zur Erzeugung einer gleichgerichteten Hochspannung nur ein Gleichrichter, z.B. D1, notwendig. Die gleichgerichtete Hochspannung wird zwischen der dem Metallband 4 abgewandten Elektrode von D1 und dem nicht mit dem Metallband 4 verbundenen Wicklungsende 6 der Sekundärwicklung w2 abgenommen. Werden zwei Gleichrichter D1 sowie D2 an das Metallband 4 angeschlossen, so sind diese z.B. als «Doppler» wie in Fig. 2 gezeigt zu beschalten. Das dem Metallband 4 angewandte Wicklungsende 6 der Sekundärwicklung w2 ist über eine erste Kapazität C1 mit der Katode des Gleichrichters D1 und über eine zweite Kapazität C2 mit der Anode des Gleichrichters D2 verbunden. Die Verbindung der Anode von D1 und der Katode von D2 ist durch das Metallband, wie in Fig. 1 dargestellt, gegeben. Letzterer Verbindungspunkt ist an das, hohes Wechselspannungspotential, führende Anschlussende 7 der Sekundärwicklung w2, wie auch aus Fig. 1 ersichtlich, angeschlossen.

In Fig. 2 ist auch die Richtung des magnetischen Flusses $\emptyset$ bezüglich der Sekundärwicklung eingetragen. Bei zeitlicher Veränderung des Flusses baut sich die Spannung U zwischen den Wicklungsenden 6 und 7 in gleichen Schritten von beispielsweise U/20 von Windung zu Windung, bzw. von U/5 von Wicklungslage zu Wicklungslage auf. Relativ zum Wicklungsende 6 schwingt die Spannung des Wicklungsendes 7 mit der Gesamtamplitude 2U zwischen −U und +U. Die Elektrode der Gleichrichter D1 und D2, die mit dem Wicklungsende 7 verbunden ist, schwingt mit, während die Wechselspannungsamplitude an den mit den Kondensatoren C1 bzw. C2 verbundenen Gleichrichterelektroden gleich 0 ist. Die Wechselspannungspotential führenden Elektroden der Gleichrichter D1 und D2 sind an das Metallband guter Wärmeleitfähigkeit 4 angelötet. Das Metallband 4 hat etwa die Lagenspannung der letzten Wicklungslage der Sekundärwicklung w2 und braucht deshalb keine aufwendigere Isolierung als die zwischen den Lagen vorgesehene.

Fig. 3 zeigt die Röntgenaufnahme eines Querschnitts durch den Transformator. Der tief schwarz gefärbte Ring stellt die Transformatorwicklungen dar. Die homogene Schwarzfärbung deutet darauf hin, dass die Packungsdichte des Wickelgutes, vorzugsweise Kupferdraht, sehr gross ist. Der Wärmeübergang vom Metallband 4 auf den metallischen Schirm 2 wird dadurch unterstützt. Wie aus Fig. 3 weiter ersichtlich ist, liegt das Metallband 4 eng am äusseren Umfang der Sekundärwicklung an und sorgt für eine gleichmässige Verteilung der Verlustwärme der Gleichrichter D1 und D2, die über Ansätze 9 und 10 sowohl thermisch als auch elektrisch mit dem Metallband 4 verbunden sind. Das Metallband 4 ist geteilt, damit es keine Kurzschlusswicklung für den Transformator darstellt. Das nicht mit Wechselspannungspotential beaufschlagte Wicklungsende ist getrennt herausgeführt. Das Wechselspannungspotential führende Wicklungsende ist über eine Anschlussfahne 11 mit dem Metallband 4 verbunden.

Fig. 4 zeigt den Gesamtaufbau einer beispielhaften Ausführungsform des erfindungsgemässen Transformators im Längsschnitt. Dieser Transformator weist mehrere Kammern 12 zur Unterbringung jeweils einer Sekundärwicklung w2 auf. Die Wechselspannungspotential führenden Wicklungsenden der Sekundärwicklungen w2 sind über Spangen 14 mit den Gleichrichtern 15 verbunden. Drahtanschlüsse 6 verbinden die nicht Wechselspannungspotential führenden Wicklungsenden mit den Anschlusskabeln, die hinter den Kabeln 19 verdeckt sind. Die Spangen 14 sind vorzugsweise aus Kupfer und dienen als Halter für die Gleichrichter. Ausserdem dienen sie als Verteiler der Verlustwärme um den Spulenkörper. Die Gleichrichter 15 sind wie die Metallbänder 4 in das Isoliermaterial 16 der Sekundärwicklungen w2 eingebettet. Die Primärwicklung w1 ist dem Kernloch 17 des Transformators benachbart. Sie ist von dem metallischen Schirm 2 umgeben, der wiederum auf das Transformatorgehäuse, bzw. den Sockel 18 aufgesetzt ist. Zwischen metallischem Schirm 2 und den Kammern 12 für die Sekundärwicklungen w2 befindet sich die Hauptisolationsschicht 3. Die Gleichrichter 15 sind im Ausführungsbeispiel nach Fig. 4 senkrecht bezüglich der Transformatorlängsachse eingebaut und die an den Enden eingegossenen Hochspannungskabel 19 liegen ebenfalls senkrecht zur Transformatorlängsachse.

Das Ausführungsbeispiel nach Fig. 5 zeigt den gleichen Aufbau des Transformators. Jedoch sind hier die Gleichrichter 15 parallel zur Transformatorlängsachse angeordnet und die Hochspannungskabel 19 weisen nach oben. Durch diese Anordnung ist für bestimmte Anwendungen ein platzsparender und kompakterer Aufbau möglich.

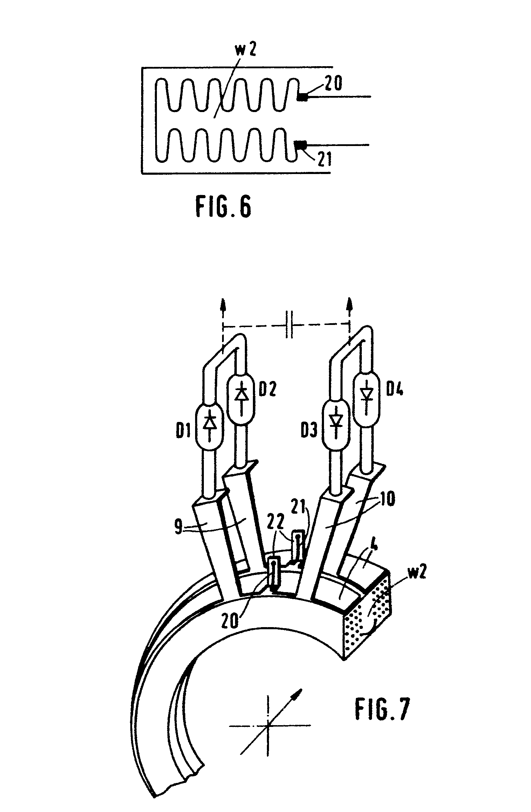

Fig. 6 zeigt im radialen Schnitt prinzipiell die Wicklungsführung der Sekundärwicklung für zwei Wechselspannungspotentiale führenden Ausgänge. Es wird derart gewickelt, dass die Wechselspannungspotential führenden Wicklungsenden 20, 21 immer am äusseren Umfang der Sekundärwicklung w2 liegen.

Fig. 7 zeigt die Beschaltung einer Sekundärwicklung w2 mit einer Brückenschaltung, bestehend aus den Gleichrichtern D1, D2, D3 und D4. Die Sekundärwicklung w2 ist, wie in Fig. 6 angegeben, gewickelt und je ein Wicklungsende 20 und 21 ist mit je einem Metallband 4 verbunden. Zur einfacheren Montage der Gleichrichter weisen die Metallbänder 4 Ansätze 9 und 10 auf (in Fig. 4 entsprechend den Spangen 14), die senkrecht von den Metallbändern 4 abstehen und an ihren Enden abgewinkelt sind. Die abgewinkelten Enden der Ansätze 9 und 10 sind mit Bohrungen versehen, in die die Elektroden der Gleichrichter eingelötet sind. Weitere Ansätze 22 dienen zur Kontaktierung der Wechselspannungspotential führenden Wicklungsenden 20 und 21.

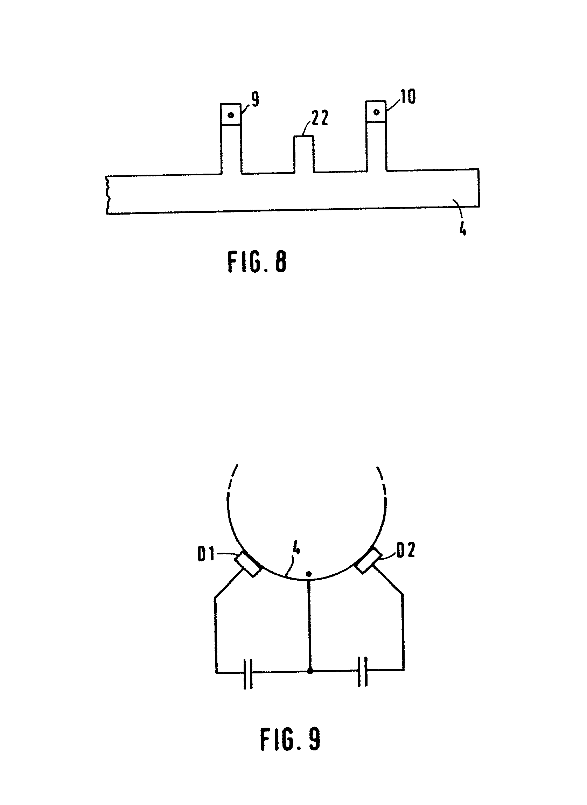

Fig. 8 zeigt ein abgewickeltes Metallband mit den Ansätzen 9 bzw. 10 für Gleichrichterelektroden und den Ansätzen 22 für die Wicklungsenden.

Fig. 9 zeigt schematisch ein Ausführungsbeispiel unter Verwendung von Flächengleichrichtern. Die flächenhaften Elektroden der Gleichrichter D1 und D2 stehen in direktem elektrischen und thermischen Kontakt mit dem Metallband 4. Dadurch ist ein sehr guter Wärmeübergang gewährleistet und die Wärmestromdichte beim Übergang von den Gleichrichtern zum Metallband erheblich reduziert.

**Patentansprüche**

1. Anordnung zur Erzeugung gleichgerichteter Hochspannungen mit einer Spulenanordnung, die in Isoliermaterial (3, 16) eingebettet ist, wobei die Anschlussenden (6, 7) der Spulenanordnung mit Gleichrichtern (D1; D2; D3; D4; D15) über ein Metallband (4), bzw. Metallbänder, elektrisch und thermisch gekoppelt sind, dadurch gekennzeichnet, dass die Spulenanordnung ein Transformator mit einer Primär- (w1) und einer oder mehreren Sekundärwicklungen (w2) ist, dass um den Transformatorkern zuerst die Primärwicklung (w1), darüber ein metallischer Schirm (2) mit einer ihn umgebenden Hauptisolationsschicht (3) und darüber wiederum die in Isoliermaterial (16) eingebettete(n) Sekundärwicklung(en) (w2) angeordnet ist (sind), dass die, hohes Wechselspannungspotential führenden, Anschlussenden (6, 7) der Sekundärwicklung(en) (w2) über mindestens eines der gut wärmeleitenden Metallbänder (4), welches auf der (den) Sekundärwicklung(en) (w2) aufliegt, mit den Gleichrichtern (D1; D2; D3; D4; 15) verbunden sind, dass das Metallband/die Metallbänder (4) über die Anschlüsse der Gleichrichter (D1; D2; D3; D4; 15) hinaus den äusseren Umfang der Sekundärwicklung(en) (w2) umgreift/umgreifen, jedoch keine Kurzschlusswicklung(en) für den Transformator darstellt/darstellen, derart, dass eine Wärmeabgabe zum metallischen Schirm (2) hin gefördert wird, dass die Metallbänder (4) derart auf die äusserste Wicklungslage der Sekundärwicklung(en) (w2) aufgebracht sind, dass ein guter Wärmeübergang zwischen den Metallbändern (4) und der Sekundärwicklung (w2) zustande kommt, und dass die Sekundärwicklung(en) (w2) derart gewickelt ist (sind), dass nur das (die) nach aussen weisende(n) Wicklungsende(n) (7; 20, 21) der Sekundärwicklung(en) (w2) Wechselspannungspotential führt (führen).

2. Anordnung nach Anspruch 1, dadurch gekennzeichnet, dass die Gleichrichter (D1; D2; D3; D4; 15) und die Metallbänder (4) mit in das Isoliermaterial (16) der Sekundärwicklung(en) (w2) eingebettet sind.

3. Anordnung nach Anspruch 1 oder 2, dadurch gekennzeichnet, dass die Metallbänder (4) Ansätze (9, 10, 22) zum Anschluss der Gleichrichter (D1; D2; D3; D4; 15) und/oder Wechselspannungspotential führenden Anschlussenden der Sekundärwicklung(en) aufweisen.

4. Anordnung nach einem der Ansprüche 1 bis 3, dadurch gekennzeichnet, dass die Dicke der Isolationsschicht zwischen der äussersten Wicklungslage der (den) Sekundärwicklung(en) (w2) und den Metallbändern (4) so gross bemessen ist wie die Dicke der Isolationsschicht zwischen den einzelnen Lagen der Sekundärwicklung(en).

**Revendications**

1. Dispositif générateur de hautes tensions continues, comportant un agencement de bobines qui est noyé dans de la matière isolante (3, 16), les extrémités pour raccordement (6, 7) de l'agencement de bobines avec redresseurs (D1; D2; D3; D4; D15) étant électriquement et thermiquement couplées par l'intermédiaire d'une ou plusieurs bandes métalliques (4), caractérisé en ce que l'agencement de bobines est un transformateur avec un enroulement primaire (w1) et un ou plusieurs enroulements secondaires (w2), en ce que sont agencés autour du noyau du transformateur, en premier l'enroulement primaire (w1), puis, par-dessus celui-ci, un blindage métallique (2) avec une couche (3) d'isolation principale qui l'entoure et, de nouveau par-dessus, le ou les enroulements secondaires (w2) noyés dans de la matière isolante (16), en ce que les extrémités (6, 7) pour raccordement du ou des enroulements secondaires (w2), portant le potentiel de haute tension alternative, sont reliées aux redresseurs (D1; D2; D3; D4; 15) par l'intermédiaire d'au moins l'une des bandes métalliques (4) bonnes conductrices de la chaleur, cette bande étant appliquée sur le ou les enroulements secondaires (w2); en ce que la ou les bandes métalliques (4) entourent, au-delà des bornes de raccordement des redresseurs (D1; D2; D3; D4; 15), le pourtour extérieur du ou des enroulements secondaires (w2), toutefois sans constituer d'enroulement(s) en court-circuit pour le transformateur, de manière à encourager un transfert de chaleur vers le blindage métallique (2), en ce que les bandes métalliques (4) sont appliquées de telle sorte, sur la couche la plus extérieure du ou des enroulements secondaires (w2), qu'il y ait un bon transfert de chaleur entre les bandes métalliques (4) et l'enroulement secondaire (w2), et en ce que le ou les enroulements métalliques (w2) sont enroulés de manière telle que le potentiel de la tension alternative ne soit présent que sur la ou les extrémités tournées vers l'extérieur (7; 20, 21) du ou des enroulements secondaires (w2).

2. Dispositif selon la revendication 1, caractérisé en ce que les redresseurs (D1; D2; D3; D4; 15) et les bandes métalliques (4) sont noyés dans la matière isolante (16) du ou des enroulements secondaires (w2);

3. Dispositif selon la revendication 1 ou 2, caractérisé en ce que la ou les bandes métalliques (4) présentent des saillies (9, 10, 22) pour le raccordement des redresseurs (D1; D2; D3; D4; 15) et/ou des extrémités portées au potentiel de la haute-tension alternative du ou des enroulements secondaires.

4. Dispositif selon l'une des revendications 1 à 3, caractérisé en ce que l'épaisseur de la couche d'isolement entre la couche d'enroulement la plus à l'extérieur du ou des enroulements secondaires (w2) et les bandes métalliques (4) est aussi grande que l'épaisseur de la couche d'isolement entre les couches individuelles du ou des enroulements secondaires.

**Claims**

1. Arrangement for the production of rectified high voltages with a coil arrangement which is embedded in insulating material (3, 16), wherein the terminal ends (6, 7) of the coil arrangement are electrically and thermally coupled by way of a metal tape (4) or metal tapes with rectifiers (D1; D2; D3; D4; 15), characterised thereby, that the coil arrangement is a transformer with a primary winding (w1) and one or more secondary windings (w2), that arranged around the transformer core is first the primary winding (w1), thereover a metallic screen (2) with a main insulating layer (3) surrounding it and thereover in turn the secondary winding or windings (w2) embedded in insulating material (16), that the terminal ends (6, 7), which carry a high alternating voltage potential, of the secondary winding or windings (w2) are connected with the rectifiers (D1; D2; D3; D4; 15) by way of at least one of the thermally highly conductive metal tapes (4) resting on the secondary winding or windings (w2), that the metal tape or tapes (4) beyond the terminals of the rectifiers (D1; D2; D3; D4; 15) encompasses or encompass the outer circumference of the secondary winding or windings (w2) without however representing any short-circuit winding for the transformer in such a manner that a heat delivery to the metallic screen (2) is promoted, that the metal tapes (4) are mounted in such a manner on the outermost winding layer of the secondary winding or windings (w2) that a good heat transfer comes into being between the metal tapes (4) and the secondary winding or windings (w2) and that the secondary winding or windings (w2) is or are wound in such a manner that only the outwardly pointing winding end or ends (7; 20; 21) of the secondary winding or windings (w2) carries or carry alternating voltage potential.

2. Arrangement according to claim 1, characterised thereby, that the rectifiers (D1; D2; D3; D4; 15) and the metal tapes (4) are also embedded in the insulating material (16) of the secondary winding or windings (w2).

3. Arrangement according to claim 1 or 2, characterised thereby, that the metal tapes (4) display projections (9, 10, 22) for the connection of the rectifiers (D1; D2; D3; D4; 15) and/or the terminal ends which carry alternating voltage potential, of the secondary winding or windings.

4. Arrangement according to one of the claims 1 to 3, characterised thereby, that the thickness of the insulating layer between the outermost winding layer of the secondary winding or windings (w2) and the metal tapes (4) is dimensioned to be as great as the thickness of the insulating layer between the individual layers of the secondary winding or windings.

FIG.1

FIG.2

FIG.3

FIG.4

FIG.5

4 / 5

FIG.6

FIG.7

FIG. 8

FIG. 9